# EUROPÄISCHE PATENTANMELDUNG

(11) **EP 1 241 831 A1**
(43) Veröffentlichungstag der Anmeldung: **18.09.2002**
(21) Anmeldenummer: 01106701.4
(22) Anmeldetag: 16.03.2001
(51) Int. Cl.: H04L 12/28

(54) **Rechnersystem mit zwei Rechnern und einer zwischen den Rechnern angeordneten Datenverbindung**

(71) Anmelder: Institut für Telematik E.V., 54292 Trier (DE)
(72) Erfinder: Engel, Thomas, Dr.rer.nat., 54294 Trier (DE); Haffner, Ernst-Georg, Dipl. Inf., 54413 Gusenberg (DE); Meinel, Christoph, Dr.sc.nat., 54317 Guserath (DE)
(74) Vertreter: Dreiss, Fuhlendorf, Steimle & Becker

(57) **Zusammenfassung**

Die Erfindung betrifft ein Rechnersystem (1) umfassend einen ersten Rechner (2), einen zweiten Rechner (3) und eine Datenverbindung zwischen dem ersten Rechner (2) und dem zweiten Rechner (3) zum Zwecke einer Datenübertragung. In der Datenverbindung ist ein Schleusenelement (8) angeordnet, das hardwaremäßig realisierte Mittel aufweist, die eine gleichzeitige Verbindung zwischen dem ersten Rechner (2) und dem Schleusenelement (8) einerseits und zwischen dem zweiten Rechner (3) und dem Schleusenelement (8) andererseits unmöglich machen. Um einen unberechtigten Zugriff von dem Rechner (2) des Rechnersystems (1) auf den anderen Rechner (1) des Rechnersystems (1) oder umgekehrt mit Hilfe des zwischen den beiden Rechnern (1, 2) angeordneten Schleusenelements (8) und gleichzeitig die Gefahr einer Manipulation des Schleusenelements (8) von außerhalb wirksam verhindern zu können, wird vorgeschlagen, dass die Mittel als ein Umschaltelement (9) ausgebildet sind, das zwischen dem Schleusenelement (8) einerseits und dem ersten Rechner (2) und dem zweiten Rechner (3) andererseits angeordnet ist und das zwischen einer ersten Verbindung zwischen dem Schleusenelement (8) und dem ersten Rechner (2) und einer zweiten Verbindung zwischen dem zweiten Rechner (3) und dem Schleusenelement (8) umschaltbar ist.

## Beschreibung

Die vorliegende Erfindung betrifft ein Rechnersystem umfassend einen ersten Rechner, einen zweiten Rechner und eine Datenverbindung zwischen dem ersten Rechner und dem zweiten Rechner zum Zwecke einer Datenübertragung. In der Datenverbindung ist ein Schleusenelement angeordnet, das hardwaremäßig realisierte Mittel aufweist, die eine gleichzeitige Verbindung zwischen dem ersten Rechner und dem Schleusenelement einerseits und zwischen dem zweiten Rechner und dem Schleusenelement andererseits unmöglich machen.

Die Erfindung betrifft außerdem ein Schleusenelement, das in einer Datenverbindung angeordnet ist, die zum Zwecke einer Datenübertragung zwischen einem ersten Rechner und einem zweiten Rechner ausgebildet ist. Das Schleusenelement weist hardwaremäßig realisierte Mittel auf, die eine gleichzeitige Verbindung zwischen dem ersten Rechner und dem Schleusenelement einerseits und zwischen dem zweiten Rechner und dem Schleusenelement andererseits unmöglich machen.

Die vorliegende Erfindung betrifft schließlich auch ein Verfahren zum Übertragen von Daten über eine Datenverbindung von einem ersten Rechner an einen zweiten Rechner. Die Daten werden zunächst über eine erste Verbindung von dem ersten Rechner an ein in der Datenverbindung angeordnetes Schleusenelement übertragen. Dann wird die erste Verbindung unterbrochen und eine zweite Verbindung zwischen dem Schleusenelement und dem zweiten Rechner hergestellt. Schließlich werden die Daten von dem Schleusenelement an den zweiten Rechner übertragen. Eine gleichzeitige Verbindung zwischen dem ersten Rechner und dem Schleusenelement einerseits und zwischen dem zweiten Rechner und dem Schleusenelement andererseits wird hardwaremäßig verhindert.

Der erste Rechner ist bspw. Teil eines internen unternehmensweiten Rechnernetzwerkes. Der zweite Rechner ist bspw. ein Server im weltumspannenden Internet. Durch das Schleusenelement kann ein Zugriff durch einen unbefugten Dritten (von dem zweiten Rechner aus) über das Internet auf das interne Rechnernetzwerk (den ersten Rechner) wirksam verhindert werden. Die zwischen dem ersten und dem zweiten Rechner zu übertragenden Daten werden zunächst an das Schleusenelement übertragen und dort im Hinblick auf eine erhöhte Datensicherheit für den Rechner, für den die Daten bestimmt sind, sicherheitstechnisch verarbeitet. So können bspw. vor der Weiterleitung der Daten Viren entfernt werden oder aber eine Weiterleitung der Daten kann komplett verhindert werden.

Das Rechnersystem der eingangs genannten Art mit dem Schleusenelement der eingangs genannten Art geht von dem aus der DE 198 38 253 und der PCT/EP99/05550 bekannten Stand der Technik aus. Auf diese beiden Druckschriften wird ausdrücklich Bezug genommen. In diesen Druckschriften wird ein Rechnersystem offenbart, das einen ersten Rechner, einen zweiten Rechner und dazwischen eine Datenverbindung zum Zwecke der Datenübertragung. In der Datenverbindung ist ein Schleusenelement angeordnet, das hardwaremäßig und nicht wie sonst üblich softwaremäßig realisierte Mittel aufweist, die eine gleichzeitige Verbindung des Schleusenelements zu dem ersten Rechner einerseits und zu dem zweiten Rechner andererseits physikalisch unmöglich machen. Durch die hardwaremäßige Realisierung der Mittel wird eine Manipulation des Schleusenelements von außerhalb oder durch anderweitig unberechtigten Zugriff unmöglich.

Im Stand der Technik sind diese Mittel als eine Integrated Services Digital Network (ISDN)-Verbindung nach dem Net Terminal Basis Adapter (NTBA)-Standard ausgebildet. Für den Aufbau einer Verbindung zwischen einem der beiden Rechner einerseits und dem Schleusenelement andererseits und für die Datenübertragung zwischen den Rechnern und dem Schleusenelement werden beide B-Kanäle der ISDN-Verbindung benötigt. Wenn also eine erste Verbindung zwischen einem der beiden Rechner und dem Schleusenelement aufgebaut ist, stehen keine weiteren B-Kanäle für den Aufbau einer zweiten Verbindung zu dem anderen Rechner mehr zur Verfügung. Erst wenn die erste Verbindung unterbrochen wurde und die beiden B-Kanäle wieder zur Verfügung stehen, kann die zweite Verbindung aufgebaut werden.

Der vorliegenden Erfindung liegt die Aufgabe zugrunde, einen unberechtigten Zugriff von einem Rechner eines Rechnersystems auf einen anderen Rechner des Rechnersystems mit Hilfe eines zwischen den beiden Rechnern angeordneten Schleusenelements und gleichzeitig die Gefahr einer Manipulation des Schleusenelements von außerhalb wirksam verhindern zu können.

Zur Lösung dieser Aufgabe wird ausgehend von dem Rechnersystem der eingangs genannten Art vorgeschlagen, dass die Mittel als ein Umschaltelement ausgebildet sind, das zwischen dem Schleusenelement einerseits und dem ersten Rechner und dem zweiten Rechner andererseits angeordnet ist und das zwischen einer ersten Verbindung zwischen dem Schleusenelement und dem ersten Rechner und einer zweiten Verbindung zwischen dem zweiten Rechner und dem Schleusenelement umschaltbar ist.

Das Umschaltelement stellt hardwaremäßig sicher, dass das Schleusenelement immer nur mit einem der beiden Rechner in Verbindung steht, niemals aber mit beiden Rechnern gleichzeitig. Mit Hilfe des Schleusenelements kann ein unberechtigter Zugriff von einem Rechner eines Rechnersystems auf einen anderen Rechner des Rechnersystems besonders wirksam verhindert werden. Gleichzeitig kann aufgrund der hardwaremäßigen Realisierung des Schleusenelements bzw. des Umschaltelements die Gefahr einer Manipulation des Schleusenelements von außerhalb wirksam verhindert werden. Insgesamt kann bei dem erfindungsgemäßen Rechnersystem ein besonders wirkungsvoller Schutz eines Rechners des Rechnersystems vor einem unberechtigten Zugriff von einem anderen Rechner des Rechnersystems aus erzielt werden.

Die Steuerung des Umschaltelements kann durch eine in dem Schleusenelement angeordnete Steuerung oder durch einen der beiden Rechner erfolgen, vorzugsweise durch den vor unbefugtem Zugriff zu schützenden Rechner, z.B. den in einem internen unternehmensweiten Rechnernetzwerk angeordneten Rechner. Das Umschaltelement wird vorzugsweise zwischen der ersten und zweiten Verbindung hin- und hergeschaltet, ohne vorher zu überprüfen, ob über die erste oder die zweite Verbindung zu übertragende Daten anliegen. Das Hin- und Herschalten des Umschaltelements kann in konstanten zeitlichen Abständen erfolgen. Es ist aber auch denkbar, dass von einer aktiven Verbindung erst dann auf die andere Verbindung umgeschaltet wird, wenn sämtliche anliegenden Daten über die aktive Verbindung übertragen wurden. Solange keine Verbindung zwischen einem der Rechner des Rechnersystems und dem Schleusenelement hergestellt ist, warten die Daten in den jeweiligen Datennetzen der Rechner auf den Aufbau einer Verbindung. Die Datenübertragung zwischen den Rechnern über die Verbindungen kann über beliebige Protokolle erfolgen.

Gemäß einer vorteilhaften Weiterbildung der vorliegenden Erfindung wird vorgeschlagen, dass in dem Schleusenelement Speichermittel zum Zwischenspeichern von über die erste Verbindung oder über die zweite Verbindung in das Schleusenelement übertragenen Daten vorgesehen sind.

Gemäß einer bevorzugten Ausführungsform der Erfindung wird vorgeschlagen, dass in dem Schleusenelement Steuermittel zum Steuern des Umschaltelements vorgesehen sind. Vorteilhafterweise steuern die Steuermittel die Datenübertragung in das Schleusenelement hinein und aus dem Schleusenelement heraus über die erste Verbindung bzw. über die zweite Verbindung.

Gemäß einer anderen vorteilhaften Weiterbildung der vorliegenden Erfindung wird vorgeschlagen, dass in dem Schleusenelement ein dritter Rechner angeordnet ist, der die in dem Schleusenelement enthaltenen Daten im Hinblick auf eine erhöhte Datensicherheit für den Rechner für den die Daten bestimmt sind, sicherheitstechnisch verarbeitet. Der dritte Rechner entscheidet nach einer sicherheitstechnischen Verarbeitung der Daten auch über mögliche weitere Maßnahmen. Diese können z.B. sein, eine normale Übertragung der Daten an den Rechner ermöglichen, für den sie bestimmt sind, das Entfernen von Viren aus den Daten, falls solche entdeckt wurden, oder die Vernichtung der Daten, falls ein Wiederherstellen der Daten nicht möglich ist oder nicht sinnvoll erscheint. Es wird außerdem vorgeschlagen, dass die Speichermittel und/oder die Steuermittel in dem dritten Rechner realisiert sind.

Gemäß einer weiteren bevorzugten Ausführungsform der vorliegenden Erfindung wird vorgeschlagen, dass zwischen dem Schleusenelement und dem ersten Rechner und/oder zwischen dem Schleusenelement und dem zweiten Rechner weitere Speichermittel zum Zwischenspeichern von an das Schleusenelement zu übertragenden Daten angeordnet sind. Die weiteren Speichermittel sind bspw. in Datennetzen des ersten oder zweiten Rechners angeordnet. Solange keine Verbindung zwischen dem Schleusenelement einerseits und dem ersten Rechner oder dem zweiten Rechner des Rechnersystems andererseits hergestellt ist, warten die Daten in den weiteren Speichermitteln der Datennetze auf den Aufbau einer Verbindung. Nach dem Aufbau der Verbindung werden die Daten dann aus den weiteren Speichermitteln an das Schleusenelement übertragen.

Die Datenübertragung über die erste Verbindung und über die zweite Verbindung erfolgt vorteilhafterweise über mindestens eines der nachfolgend aufgeführten Protokolle:
- Integrated Services Digital Network (ISDN) ;
- Ethernet 10 Mbit;
- Ethernet 100 Mbit;
- Asynchronous Transfer Mode (ATM); oder
- Digital Subscriber Line (DSL).

Als eine weitere Lösung der Aufgabe der vorliegenden Erfindung wird ausgehend von dem Schleusenelement der eingangs genannten Art vorgeschlagen, dass die Mittel als ein Umschaltelement ausgebildet sind, das zwischen dem Schleusenelement einerseits und dem ersten Rechner und dem zweiten Rechner andererseits angeordnet ist und das zwischen einer ersten Verbindung zwischen dem Schleusenelement und dem ersten Rechner und einer zweiten Verbindung zwischen dem zweiten Rechner und dem Schleusenelement umschaltbar ist.

Als noch eine weitere Lösung der Aufgabe der vorliegenden Erfindung wird ausgehend von dem Verfahren der eingangs genannten Art vorgeschlagen, dass zum Unterbrechen der ersten Verbindung und zum Aufbau der zweiten Verbindung ein zwischen dem Schleusenelement einerseits und dem ersten Rechner und dem zweiten Rechner andererseits angeordnetes Umschaltelement von der ersten Verbindung auf die zweite Verbindung umgeschaltet wird. Ebenso wird das Umschaltelement zum Unterbrechen der zweiten Verbindung und zum Aufbau der ersten Verbindung von der zweiten Verbindung auf die erste Verbindung umgeschaltet. Eine gleichzeitige Verbindung des Schleusenelements zu dem ersten und dem zweiten Rechner ist physikalisch unmöglich.

Gemäß einer vorteilhaften Weiterbildung der Erfindung wird vorgeschlagen, dass das Umschaltelement zwischen der ersten Verbindung und der zweiten Verbindung hin- und hergeschaltet wird, nach Herstellung einer Verbindung überprüft wird, ob über diese Verbindung Daten zu übertragen sind und falls dem so ist, die Daten übertragen werden.

Gemäß einer bevorzugten Ausführungsform der Erfindung wird vorgeschlagen, dass das Umschaltelement mit einer konstanten Frequenz zwischen der ersten Verbindung und der zweiten Verbindung hin- und herschaltet.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Rechnersystem; und
- Figur 2: ein Ablaufdiagramm eines erfindungsgemäßen Verfahrens.

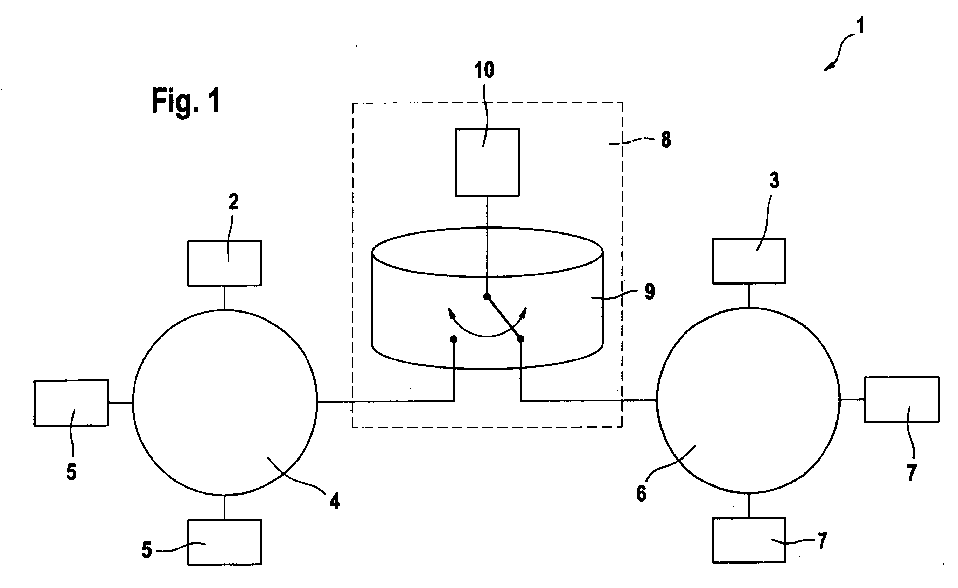

In Fig. 1 ist ein erfindungsgemäßes Rechnersystem in seiner Gesamtheit mit dem Bezugszeichen 1 bezeichnet. Es umfasst einen ersten Rechner 2, einen zweiten Rechner 3 und eine Datenverbindung zwischen dem ersten Rechner 2 und dem zweiten Rechner 3 zum Zwecke einer Datenübertragung. Der erste Rechner 2 ist Teil eines internen unternehmensweiten Intranets 4, das neben dem ersten Rechner 2 noch eine Vielzahl weiterer Rechner 5 umfasst. Der zweite Rechner 3 ist ein Server im weltumspannenden Internet 6, das neben dem zweiten Rechner 3 noch eine Vielzahl weiterer Rechner 7 umfasst.

In der Datenverbindung zwischen dem ersten Rechner 2 und dem zweiten Rechner 3 ist ein Schleusenelement 8 angeordnet, das ein hardwaremäßig realisiertes Umschaltelement 9 aufweist. Das Umschaltelement 9 ist zwischen einer ersten Verbindung zwischen dem Schleusenelement 8 und dem ersten Rechner 2 und einer zweiten Verbindung zwischen dem zweiten Rechner 3 und dem Schleusenelement 8 umschaltbar. Das Umschaltelement 9 macht eine gleichzeitige Verbindung zwischen dem ersten Rechner 2 und dem Schleusenelement 8 einerseits und zwischen dem zweiten Rechner 3 und dem Schleusenelement 8 andererseits unmöglich.

Durch das Schleusenelement 8 kann ein Zugriff durch einen unbefugten Dritten (von dem zweiten Rechner 3 aus) über das Internet 6 auf den ersten Rechner 2 in dem Intranet 4 wirksam verhindert werden. Die zwischen dem ersten Rechner 2 und dem zweiten Rechner 3 zu übertragenden Daten werden zunächst an das Schleusenelement 8 übertragen, und dort im Hinblick auf eine erhöhte Datensicherheit für den Rechner 2, 3, für den die Daten bestimmt sind, sicherheitstechnisch verarbeitet. So können bspw. vor der Weiterleitung der Daten Viren entfernt werden oder eine Weiterleitung der Daten kann komplett verhindert werden.

In dem Schleusenelement 8 ist ein dritter Rechner 10 angeordnet, der die sicherheitstechnische Verarbeitung der in dem Schleusenelement 8 enthaltenen Daten übernimmt. Der dritte Rechner umfasst auch Steuermittel zum Steuern des Umschaltelements 9 und Speichermittel zum Zwischenspeichern von an das Schleusenelement 8 übertragenen Daten. Alternativ kann das Umschaltelement auch von dem vor unbefugtem Zugriff zu schützenden ersten Rechner 2 des Intranets 4 gesteuert werden. Die Steuermittel können auch die Datenübertragung in das Schleusenelement 8 hinein und aus dem Schleusenelement 8 heraus über die erste Verbindung bzw. über die zweite Verbindung steuern. Nach der sicherheitstechnischen Verarbeitung werden die Daten aus dem Zwischenspeicher an den bestimmungsgemäßen Rechner 2, 3 weitergeleitet oder gelöscht.

Die Datenübertragung zwischen dem ersten Rechner 2 und dem zweiten Rechner 3 über die erste und zweite Verbindung erfolgt nach einem beliebigen Protokoll. Insbesondere ist an den Einsatz der nachfolgenden Protokolle gedacht:
- Integrated Services Digital Network (ISDN);
- Ethernet 10 Mbit;
- Ethernet 100 Mbit;
- Asynchronous Transfer Mode (ATM); oder
- Digital Subscriber Line (DSL).

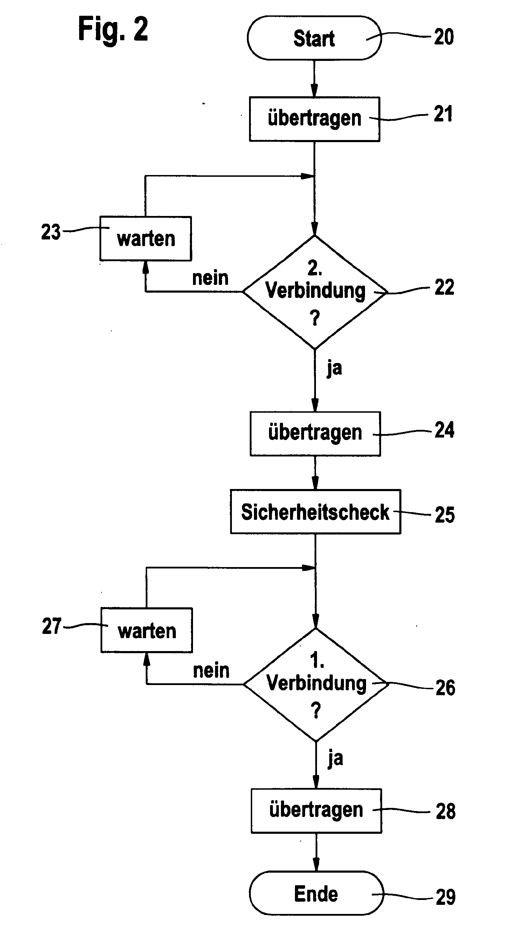

In Fig. 2 ist ein Ablaufdiagramm eines erfindungsgemäßen Verfahren zur Übertragung von Daten zwischen dem ersten Rechner 2 und dem zweiten Rechner 3 dargestellt. Das Verfahren beginnt in einem Funktionsblock 20. In einem Funktionsblock 21 werden dann für den ersten Rechner 2 bestimmte Daten zunächst über die zweite Verbindung von dem zweiten Rechner 3 aus dem Internet 6 an das Schleusenelement 8 übertragen. In einen Abfrageblock 22 wird überprüft, ob sich das Umschaltelement 9 in einer Schaltstellung befindet, in der die zweite Verbindung zu dem dritten Rechner 10 des Schleusenelements 8 durchgeschaltet ist. Falls nein, werden die Daten in einem Funktionsblock 23 so lange in einer Warteposition gehalten, bis die zweite Verbindung durchgeschaltet ist. Sobald das der Fall ist werden die Daten in einem Funktionsblock 24 über die zweite Verbindung an den dritten Rechner 10 übertragen. Dort findet eine sicherheitstechnische Verarbeitung der Daten statt, die durch einen Funktionsblock 25 symbolisiert ist. In dem Funktionsblock 25 werden auch die entsprechenden Maßnahmen zum Schutz des ersten Rechners 1 ergriffen.

In einem Abfrageblock 26 wird dann überprüft, ob sich das Umschaltelement 9 in einer Schaltstellung befindet, in der die erste Verbindung zu dem ersten Rechner 2 des Intranets 4 durchgeschaltet ist. Falls nein, werden die Daten in einem Funktionsblock 27 so lange in dem dritten Rechner 10 zwischengespeichert, bis die erste Verbindung durchgeschaltet ist. Sobald das der Fall ist werden die Daten in einem Funktionsblock 28 über die erste Verbindung an den ersten Rechner 2 übertragen. Die Datenübertragung ist erfolgreich durchgeführt worden und das Verfahren kann in einem Funktionsblock 29 beendet werden. In der Gegenrichtung erfolgt die Datenübertragung von dem zweiten Rechner 3 an den ersten Rechner 2 in entsprechender Weise.

## Patentansprüche

1. Rechnersystem (1) umfassend einen ersten Rechner (2), einen zweiten Rechner (3) und eine Datenverbindung zwischen dem ersten Rechner (2) und dem zweiten Rechner (3) zum Zwecke einer Datenübertragung, wobei in der Datenverbindung ein Schleusenelement (8) angeordnet ist, das hardwaremäßig realisierte Mittel aufweist, die eine gleichzeitige Verbindung zwischen dem ersten Rechner (2) und dem Schleusenelement (8) einerseits und zwischen dem zweiten Rechner (3) und dem Schleusenelement (8) andererseits unmöglich machen, **dadurch gekennzeichnet, dass** die Mittel als ein Umschaltelement (9) ausgebildet sind, das zwischen dem Schleusenelement (8) einerseits und dem ersten Rechner (2) und dem zweiten Rechner (3) andererseits angeordnet ist und das zwischen einer ersten Verbindung zwischen dem Schleusenelement (8) und dem ersten Rechner (2) und einer zweiten Verbindung zwischen dem zweiten Rechner (3) und dem Schleusenelement (8) umschaltbar ist.

2. Rechnersystem (1) nach Anspruch 1, **dadurch gekennzeichnet, dass** in dem Schleusenelement (8) Speichermittel zum Zwischenspeichern von über die erste Verbindung oder über die zweite Verbindung in das Schleusenelement (8) übertragenen Daten vorgesehen sind.

3. Rechnersystem (1) nach Anspruch 1 oder 2, **dadurch gekennzeichnet, dass** in dem Schleusenelement (8) Steuermittel zum Steuern des Umschaltelements (9) vorgesehen sind.

4. Rechnersystem (1) nach Anspruch 3, **dadurch gekennzeichnet, dass** die Steuermittel die Datenübertragung in das Schleusenelement (8) hinein und aus dem Schleusenelement (8) heraus über die erste Verbindung bzw. über die zweite Verbindung steuern.

5. Rechnersystem (1) nach einem der Ansprüche 1 bis 4, **dadurch gekennzeichnet, dass** in dem Schleusenelement (8) ein dritter Rechner (10) angeordnet ist, der die in dem Schleusenelement (8) enthaltenen Daten im Hinblick auf eine erhöhte Datensicherheit für den Rechner (1; 2), für den die Daten bestimmt sind, sicherheitstechnisch verarbeitet.

6. Rechnersystem (1) nach einem der Ansprüche 2 bis 5, **dadurch gekennzeichnet, dass** die Speichermittel und/oder die Steuermittel in dem dritter Rechner (10) realisiert sind, der in dem Schleusenelement (8) angeordnet ist.

7. Rechnersystem (1) nach einem der Ansprüche 1 bis 6, **dadurch gekennzeichnet, dass** zwischen dem Schleusenelement (8) und dem ersten Rechner (2) und/oder zwischen dem Schleusenelement (8) und dem zweiten Rechner (3) weitere Speichermittel zum Zwischenspeichern von an das Schleusenelement (8) zu übertragenden Daten angeordnet sind.

8. Rechnersystem (1) nach einem der Ansprüche 1 bis 7, **dadurch gekennzeichnet, dass** die Datenübertragung über die erste Verbindung und über die zweite Verbindung über mindestens eines der nachfolgend aufgeführten Protokolle erfolgt:
- Integrated Services Digital Network (ISDN);
- Ethernet 10 Mbit;
- Ethernet 100 Mbit;
- Asynchronous Transfer Mode (ATM); oder
- Digital Subscriber Line (DSL).

9. In einer zwischen einem ersten Rechner (2) und einem zweiten Rechner (3) zum Zwecke einer Datenübertragung ausgebildeten Datenverbindung angeordnetes Schleusenelement (8), das hardwaremäßig realisierte Mittel aufweist, die eine gleichzeitige Verbindung zwischen dem ersten Rechner (2) und dem Schleusenelement (8) einerseits und zwischen dem zweiten Rechner (3) und dem Schleusenelement (8) andererseits unmöglich machen, **dadurch gekennzeichnet, dass** die Mittel als ein Umschaltelement (9) ausgebildet sind, das zwischen dem Schleusenelement (8) einerseits und dem ersten Rechner (2) und dem zweiten Rechner (3) andererseits angeordnet ist und das zwischen einer ersten Verbindung zwischen dem Schleusenelement (8) und dem ersten Rechner (2) und einer zweiten Verbindung zwischen dem zweiten Rechner (3) und dem Schleusenelement (8) umschaltbar ist.

10. Verfahren zum Übertragen von Daten über eine Datenverbindung von einem ersten Rechner (2) an einen zweiten Rechner (3), wobei die Daten zunächst über eine erste Verbindung von dem ersten Rechner (2) an ein in der Datenverbindung angeordnetes Schleusenelement (8) übertragen werden, dann die erste Verbindung unterbrochen und eine zweite Verbindung zwischen dem Schleusenelement (8) und dem zweiten Rechner (3) hergestellt wird, und schließlich die Daten von dem Schleusenelement (8) an den zweiten Rechner (3) übertragen werden, wobei eine gleichzeitige Verbindung zwischen dem ersten Rechner (2) und dem Schleusenelement (8) einerseits und zwischen dem zweiten Rechner (3) und dem Schleusenelement (8) andererseits hardwaremäßig verhindert wird, **dadurch gekennzeichnet, dass** zum Unterbrechen der ersten Verbindung und zum Aufbau der zweiten Verbindung ein zwischen dem Schleusenelement (8) einerseits und dem ersten Rechner (2) und dem zweiten Rechner (3) andererseits angeordnetes Umschaltelement (9) von der ersten Verbindung auf die zweite Verbindung umgeschaltet wird.

11. Verfahren nach Anspruch 10, **dadurch gekennzeichnet, dass** das Umschaltelement (9) zwischen der ersten Verbindung und der zweiten Verbindung hin- und hergeschaltet wird, nach Herstellung einer Verbindung überprüft wird, ob über diese Verbindung Daten zu übertragen sind und falls dem so ist, die Daten übertragen werden.

12. Verfahren nach Anspruch 10 oder 11, **dadurch gekennzeichnet, dass** das Umschaltelement (9) mit einer konstanten Frequenz zwischen der ersten Verbindung und der zweiten Verbindung hin- und herschaltet.
